(19) Europäisches Patentamt
European Patent Office
Office européen des brevets

(11) **EP 2 510 598 B1**

(12) **EUROPEAN PATENT SPECIFICATION**

(45) Date of publication and mention
of the grant of the patent:
**23.07.2014 Bulletin 2014/30**

(21) Application number: **10835552.0**

(22) Date of filing: **07.12.2010**

(51) Int Cl.:
*H02H 3/06* *(2006.01)*          *H02H 3/08* *(2006.01)*
*H02H 3/20* *(2006.01)*          *H02H 3/07* *(2006.01)*
*H02H 3/22* *(2006.01)*

(86) International application number:
**PCT/FI2010/050999**

(87) International publication number:
**WO 2011/070235 (16.06.2011 Gazette 2011/24)**

(54) **ELECTRONIC PROTECTION CIRCUIT AND PROTECTION DEVICE**

ELEKTRONISCHE SCHUTZSCHALTUNG UND SCHUTZVORRICHTUNG

CIRCUIT DE PROTECTION ÉLECTRONIQUE ET DISPOSITIF DE PROTECTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.12.2009 FI 20096301**

(43) Date of publication of application:
**17.10.2012 Bulletin 2012/42**

(73) Proprietor: **Murrelektronik Power Oy
15230 Lahti (FI)**

(72) Inventor: **PIENISAARI, Heikki
FI-04600 Mäntsälä (FI)**

(74) Representative: **Kolster Oy Ab
Iso Roobertinkatu 23
PO Box 148
00121 Helsinki (FI)**

(56) References cited:
**EP-A2- 0 392 733          DE-A1-102004 059 455
US-A- 5 440 441            US-A- 5 440 441
US-A1- 2008 106 152**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

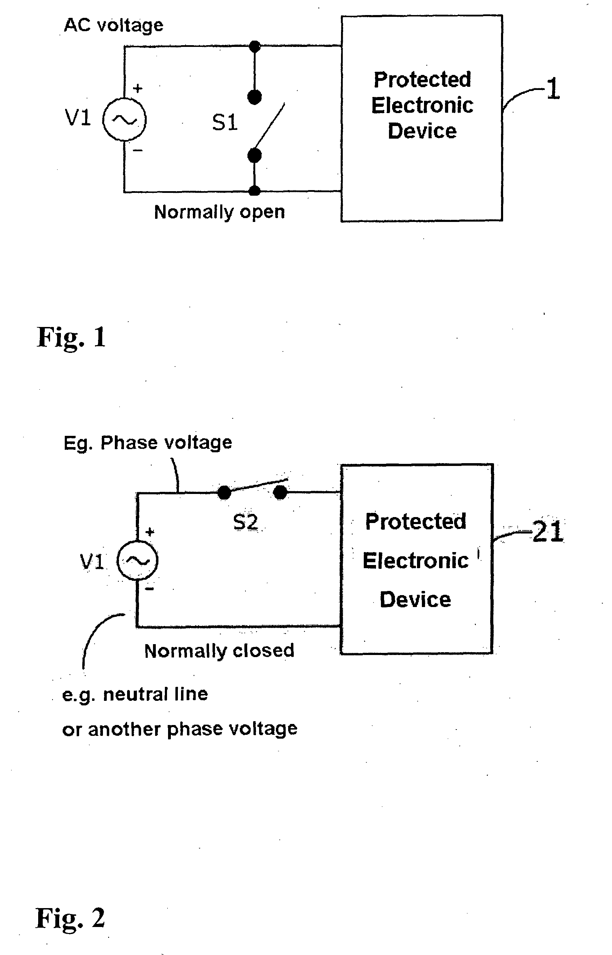

Today, overvoltage protection of electronic devices is usually based on limiting the overvoltage by loading it. Figure 1 shows a simplified operation principle of currently used overvoltage protectors. From an alternating current source V1, an alternating current (AC) is supplied to an electronic device 1 to be protected. A safety switch S1 is connected in parallel with the voltage source V1. The switch S1 is normally open but when overvoltage occurs it is closed, whereby an electric circuit is formed via the switch, loading the overvoltage and lowering its level. The overvoltage is thus prevented from reaching the device 1 to be protected. In practice, the switch S1 may be a metal oxide varistor, a transient protection diode or a gas-discharge tube. Most often the overvoltage protectors are implemented by usually employing metal oxide varistors. A varistor "is switched" to be conductive, i.e. it starts to leak, when the voltage across it exceeds a certain limit. The resistance of the varistor drops abruptly when the voltage it is subject to exceeds a particular level. Varistors are quite fast (response time < 25 ns) and inexpensive and they operate on extremely fast overvoltages (< 100 us). A transient protection diode, in turn, is extremely fast (< 10 ps) but its surge current tolerance is much lower than that of the varistors. A gas-discharge tube is slightly slower than a varistor but its function usually results in fuse blowout (a so-called crow bar protection).

Varistors function well on transient overvoltages (fast-front overvoltages) whose energy is usually quite low. These transients are most often caused by electric network switching procedures, lightning strikes or electrostatic discharges. The rise-time of these transients is very short, a couple of microseconds, but they fall relatively slowly, i.e. in a couple of hundreds of microseconds. Filters for suppressing radio interference of electronic devices often suppress current peaks caused by such a fast transient. The resistances of the coils of the filters also consume some of the energy contained in the transients. It is also possible to protect devices against transient voltages by means of chokes, whereby their inductive reactance prevents the voltage from rising at an input connection of the device to be protected, which is usually always provided with an X capacitor for suppressing radio interference. However, such chokes are rather large and expensive as compared with varistors. In addition, they may be brought into resonance with the capacitance at the input of the device to be protected, in which case they may produce overvoltages rather than protect against them. In order to avoid resonances, it is important to thoroughly know the device to be protected or, in addition, also use load resistors to prevent resonances.

However, slow-front transient overvoltages and low-frequency overvoltages (temporary overvoltages) often present more severe problems to both varistors and inductive overvoltage protectors. The small, differential-mode inductances of radio inference chokes do not limit them, and the chokes should be so large that they would significantly drop the input voltage of a device when loaded.

The operation of the currently employed overvoltage protectors is thus based on limiting the overvoltage by loading it, in which case the current passing through a protection circuit may increase considerably. If the overvoltage lasts for a long period of time, the amount of energy absorbed by a protection component, such as a varistor or a transient protection diode, (power loss) may become so large that the protection component is damaged.

US 5440441 discloses an electronic overvoltage and overcurrent protection circuit wherein a breaking switch (protection switch) is connected in series on a current path between the device to be protected and the voltage source. The protection switch is normally closed, but is opened in an overvoltage or overcurrent situation. The switch is closed again after a predetermined delay if the overcurrent or overvoltage situation has subsided.

EP0392733 discloses a solid state electric switching arrangement according to the preamble of claim 1 for switching and protecting an AC circuit against predetermined levels of overcurrent. A current level monitoring circuit is provided for monitoring peak current levels and for rendering an output of the switching arrangement to non-conductive state when predetermined overcurrent level is exceeded.

An object of the invention is a fast electronic protection circuit wherein it is possible to substantially reduce a risk of damage of protection components. The object of the invention is achieved by a protection circuit according to claim 1. Preferred embodiments of the invention are recited in the dependent claims.

According to an aspect of the invention, a device to be protected is disconnected from a voltage source by opening, i.e. breaking, an electric circuit by a series-connected switch element of the electric circuit when an overvoltage or overcurrent is detected. The electric circuit may again be quickly closed when the overvoltage or overcurrent has subsided, so that the breaking does not influence the operation of the device to be protected. Since the purpose is not to limit the overvoltage or overcurrent by loading it (e.g. by cutting the voltage) and dissipate the energy of the overvoltage or overcurrent as power losses of the protection components, the power losses of the protection component present no problem. The protection function requires an extremely fast breaking, so mechanical switches are not suitable for the purpose according to the invention. Instead, a semiconductor switch member is used as the series-connected semiconductor switch member. The term "semiconductor switch member" herein refers to any switch construction implemented by one or more controlled semiconductor components.

According to an aspect of the invention, the switch member is closed again and the device to be protected is reconnected to the supplying voltage source when the voltage across the switch member is about zero. This may be achieved by closing the switch member substantially at the zero point (zero voltage switching). This enables protection of the device to be protected against high surge currents. If the switch member were re-closed at any point after the overcurrent or overvoltage has subsided, the device to be protected might become connected at a large alternating voltage value, even a peak value, which would cause high surge currents. Owing to the capacitances and inductances of the protection circuit as well as a capacitance possibly occur-ring at the input of the protection circuit in particular, the voltage across the semiconductor switch member is not necessarily zero at the zero voltage switching point, in which case the voltage occurring across at the closing moment of the switch member may cause interference currents. This is avoided by measuring the voltage across the switch member and closing the switch member again when the voltage measured across the switch member is about zero. The protection circuit comprises monitoring a rate of change in the supply voltage, the protection circuit being arranged to prevent the semiconductor switch from being closed when the voltage across it is about zero, if the rate of change in the supply voltage at this zero point is higher than a predetermined threshold value. This threshold value may be e.g. a value which is higher than a rate of change in a voltage corresponding with the frequency of the network voltage (e.g. 50 Hz) at the voltage zero point. This makes it possible to prevent the semiconductor switch from being closed during a fast "voltage swing", which may occur if the transient voltage first e.g. rises to positive and then immediately becomes negative.

In an embodiment of the invention, a capacitor member is connected in parallel with the semiconductor switch. The capacitor member reduces the requirements set for the semiconductor switch. The term "capacitor member" herein refers to any capacitor construction implemented by one or more components.

According to an embodiment of the invention, a voltage limiter member is connected in parallel with the semiconductor switch member and the capacitor member in order to limit the voltage across the semiconductor switch member at the breaking moment. The term "voltage limiter member" herein refers to any construction for cutting voltage that is implemented by one or more protection components. The protection component may be e.g. a varistor, a transient protection diode, a gas-discharge tube or the like.

According to an embodiment of the invention, an overcurrent detector is connected in series on a current path to measure the current pass-ing through the semiconductor switch member, whereby a control member is arranged to control the semiconductor switch member in to a non-conductive state and break the current path when the overcurrent detector detects an overcurrent, and to control the semiconductor switch member back to a conductive state and reconnect the current path when no overcurrent is detected any longer, no overvoltage occurs in the supply voltage, and the voltage across the semiconductor switch member is about zero.

According to an embodiment of the invention, the control member is arranged to leave the semiconductor switch member permanently open if the device to be protected causes a continuous overcurrent. Since the overcurrent detector is in series on the current path, it would react not only to overcurrents caused by a feeder network but also to an overcurrent caused by the device to be protected (e.g. as a result of a short circuit). If the overcurrent caused by the device to be protected is continuous, the protection circuit does not preferably try to reconnect the electric circuit after a predetermined time or after a predetermined number of connection re-tries.

According to an embodiment of the invention, a voltage limiter member cutting the voltage is connected after the semiconductor switch member in order to limit the output voltage. A capacitor member may be connected in parallel with this limiter member. The transient voltage charges the capacitor member, and the resulting current causes the overcurrent protector to operate and the semiconductor switch to be opened.

According to an embodiment of the invention, an inductance is connected in series on the current path between the semiconductor switch member and the output. The purpose of the inductance is to prevent the fast transient from causing an overcurrent or overvoltage in the connection of the device to be protected itself.

According to some embodiments of the invention, the supply voltage is a voltage between a phase voltage of a single or polyphase network voltage supply and the neutral voltage or a voltage between two phase voltages.

An aspect of the invention is a protection device for a three-phase voltage supply, the device comprising, separately for each phase, a protection circuit according to some embodiment of the invention.

According to an embodiment of the invention, an overvoltage detector of the protection circuit of each phase of the protection device is arranged to monitor a corresponding phase voltage with respect to a neutral line.

According to an embodiment of the invention, limiter members internal to the protection circuits of the protection device for limiting the output voltage are connected in a delta connection between the phases.

In the following, the invention will be described in closer detail in connection with example embodiments and with reference to the accompanying drawings, in which

Figure 1 is a block diagram illustrating the principle of a prior art overvoltage protector;
Figure 2 is a block diagram illustrating the principle of a protection circuit according to the invention;
Figure 3 is a functional block diagram showing an overvoltage and overcurrent protection circuit according to an example embodiment of the invention;
Figures 4 and 5 are voltage diagrams illustrating, respectively, a network voltage $U_K$ at an input 30 of a protection circuit and an output voltage $U_o$ at an output 32 of the protection circuit as a function of time t;

Figure 6 illustrates a surge current as a function of time when a voltage interruption occurs when an NTC resistor is hot, whereafter a power source is reconnected to an electrical network in a manner according to the invention (curve B) and in a conventional manner (curve A);

Figure 7 is a connection diagram of an overvoltage and overcurrent protection circuit according to another example embodiment; and

Figure 8 is a block diagram illustrating a three-phase overvoltage and overcurrent protection circuit according to an embodiment of the invention.

The operation principle of a protection circuit according to embodiments of the invention is illustrated by the block diagram in Figure 2. In normal operation, the purpose is to supply voltage, preferably alternating voltage (AC), from a voltage source V1 to an electronic device 21 to be protected. In the case of network voltage, V1 may be a phase voltage (e.g. Vr-N) when a neutral voltage N is available, as is usually the case in connection with the single phase network voltage. In the case of a polyphase, such as three-phase, network voltage supply (e.g. phases r, s, t), V1 may be not only a phase voltage but also a main voltage (Vr-Vs) between two phases.

According to an aspect of the invention, a protection switch S2 is connected in series on the current path between the voltage source and the device 21 to be protected (i.e. in series with the voltage source rather than in parallel with the voltage source, as in the prior art protection circuit in Figure 1). In normal operation, the switch S2 is closed and the voltage source V1 is connected to the device 21 to be protected. When an overvoltage or overcurrent is detected, the device 21 to be protected may be disconnected from the voltage source V1 by opening, i.e. breaking, the electric circuit by means of this switch S2 connected in series with the electric circuit. The electric circuit may again be quickly closed by closing the switch S2 when the overvoltage or overcurrent has subsided, so that the breaking does not influence the operation of the device to be protected. Since the purpose is not to limit the overvoltage or overcurrent by loading it (e.g. by cutting the voltage) and dissipating the energy of the overvoltage or overcurrent as power losses of the protection components (as in Figure 1 in to the switch S1), the power losses of the protection component present no problem.

According to an aspect of the invention, the switch S2 is closed again when the voltage across the switch S2 is about zero. In principle, the voltage across the switch S2 is zero at a zero voltage switching point, i.e. when the alternating voltage changes its polarity. Thus, in principle, the switch S2 may be closed by detecting the zero voltage switching point and by closing the switch S2 substantially at the zero voltage switching point. In preferred embodiments of the invention, it is ensured by measuring that the voltage across the switch S2 is about zero, which enables a better protection action to be achieved.

The protection action according to the invention requires an extremely fast breaking, so mechanical switches are not suitable for the purpose according to the invention. Instead, the switch S2 is implemented as a semiconductor switch construction that may contain one or more semiconductor switch components.

In an overvoltage situation, the internal overvoltage protector of the device 21 to be protected (cutting) may limit the voltage, in which case a high current passes also through the switch S2 before it is closed. This sets extremely high requirements for the semiconductor switch to be used. However, in the preferred embodiments of the invention, this can be avoided, as will be explained in closer detail below.

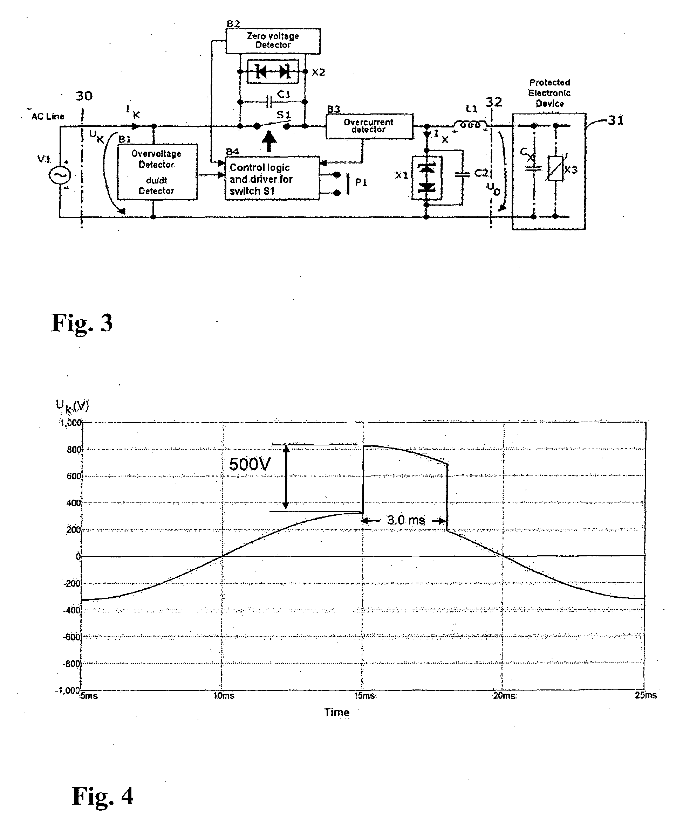

Figure 3 is a block diagram showing a protection circuit according to an example embodiment of the invention. The protection circuit, located between broken line 30 (input) and broken line 32 (output), connects the alternating voltage source V1 (e.g. an electrical network) to a protected electronic device 31.The semiconductor switch S1 is arranged in series on the current path between the input 30 to be connected to the alternating voltage source V1 and the output 32 to be connected to the electronic device 31 to be protected. A capacitance, represented by a capacitor C1 in Figure 3, is connected in parallel with the switch. An overvoltage detector block B1 monitors a supply voltage $U_K$. When the voltage exceeds a limit determined as overvoltage, a control block B4 of the switch S1 (e.g. a control logic and a driver of the switch) controls the switch S1 quickly in to the non-conductive state (breaking). An electrical network always contains inductance (about 100 to 500 $\mu$H/phase), so after breaking, the inductive current charges the capacitor C1 provided in parallel with the switch S1 by a current $I_K$. Often EMC chokes (of common and/or differential mode) of the electronic device to be protected also generate an inductive current. Consequently, the voltage of the switch S1 increases immediately after breaking by a time derivative:

$$dU_{S1}/dt = I_K/C1.$$

On account of the capacitor C1, it is possible to use semiconductor switches, which have lower requirements, as the switch S1 because du/dt may be dimensioned sufficiently small. For the same reason, in applications wherein transistors (FET, IGBT, bipolar) are used as the switch S1, the current output capacity required from gate control is smaller since the influence caused by the Miller capacitance remains smaller.

After the switch S1 has opened, the voltage across the capacitor C1, owing to the inductive current, tends towards twice the breaking point voltage $2xU_K$ (voltage doubling). When desired, the voltage being generated across the capacitor C1 and the semiconductor switch S1 may be limited by using an overvoltage protector X2 connected in parallel therewith. Preferably, an output side of the protection device may be provided with an internal overvoltage protector X1 connected between bus bars (+, -) to cut overvoltages before an output voltage $U_o$ is supplied to the device 31 to be protected. Preferably, the overvoltage protector X1 or X2 is a voltage loading (cutting) overvoltage protector, implemented e.g. by a transient protection diode, as in the example of Figure 3. In addition to the inductive current at the breaking moment of the switch S1, the highest charging voltage of the capacitor C1 also depends on the structure of the device 31 to be protected. If the input of the device 31 to be protected is provided with a capacitor $C_X$, the voltage doubling $2xU_K$ is divided between the capacitor C1 and this capacitor $C_X$ inversely proportionally to the proportion of the capacitance values thereof. If e.g. C1 = $1\mu$F and also the capacitor $C_X$ = $1\mu$F of the device 31 to be protected, $V_{X1}$ = $V_{X2}$ and $2xU_K = V_{X1} + V_{X2}$ apply, where $V_{X1}$ and $V_{X2}$ are voltages across the overvoltage protectors X1 and X2 (i.e. the capacitors $C_X$ and $C_1$), respectively.

When the switch S1 is open, the voltage $U_K$ has to exceed the combined voltage of the overvoltage protectors X1 and X2 before they have to absorb energy caused by the overvoltage, in which case current flows in the electric circuit as well. Preferably, the internal overvoltage protector X1 of the protection device according to the invention is dimensioned to have a higher maximum voltage than an internal overvoltage protector X3 provided separately in the protected electronic device 31. Typically, the separate internal voltage protector X3 provided in such an electronic device 31 operating in a 230 V network is a 275 V varistor. If a varistor, e.g. 550 V, is also used as the internal overvoltage protector X1 of a protection device according to the invention, the peak value of overvoltage has to be about 1.3 x (275 + 550)V $\approx$ 1100 V before the power losses in the varistors X1 and X2 start to increase. This equals a network voltage of about 777 VAC, whereupon a typical 275 V varistor is destroyed immediately. A portion of the inductive energy not absorbed by the overvoltage protectors X1 and X2 returns to the electrical network or is "consumed" by other conventionally protected devices which, at the same time, may be damaged.

Preferably, a resettable, electric-circuit-opening electronic protection circuit according to the invention is also provided with an overcurrent protector. The preferred embodiments of the invention may contain an overcurrent detector B3 which monitors the current on a current path between the semiconductor switch S1 and the output 32. Preferably, a monitoring point is located before the internal overvoltage protector X1. Preferably, the over current detector B3 is connected in series on the current path between the semiconductor switch S1 and the output 32. When the overcurrent detector B3 detects an overcurrent on the current path, the detector B3 generates a signal indicating of this to the control block B4 which controls the semiconductor switch S1 in to the non-conductive state (open) and to break the current path.

The resettable, electric-circuit-opening electronic protection circuit according to the invention also functions as a protection circuit for medium length transients (1 ... 100 $\mu$s) by means of the overcurrent detector B3 and the internal transient protector X1. If the network voltage exceeds the voltage monitoring limit too quickly for the overvoltage detector B1 to react (< 1 us), the overvoltage protector X1 provided separately in the protection device limits the overvoltage in a conventional manner (by loading it). In such a case, the current $I_X$ passing therethrough triggers the electronic overcurrent protector B3 which, again, breaks the switch S1 by means of the control block B4. The switch S1 returns to the conductive state (is closed) when the voltage across it drops to 0 V when the phase voltage of the network voltage changes. Since the input of the device 31 to be protected usually has a capacitance (e.g. $C_X$) whose voltage may differ from zero, the closing of the switch S1 does not necessarily take place at the zero voltage of the network voltage. Therefore, preferably, the voltage across the switch S1 is measured by a zero voltage detector B2 connected in parallel with the switch S1. When the voltage of the switch S1 is zero, the detector B2 generates a signal indicating this to the control block B4.

According to an aspect of the invention, a protection circuit is provided with monitoring a rate of change in supply voltage, in which case the protection circuit is arranged to prevent the semiconductor switch from being closed when the voltage across it is about zero, if the rate of change in the supply voltage at this zero point is higher than a predetermined threshold value. In the example of Figure 3, this is implemented by providing the overvoltage detector block B1 with a differentiating circuit (dU/dt) to prevent the switch S1 from being closed at the zero voltage switching point if the rate of change in the voltage $U_K$ at that point is higher than a voltage change equal-ling the network voltage frequency (e.g. f = 50 Hz):

$$dU_K/dt > d(U_0\sin(\omega t))/dt = \omega U_o\cos(\omega t) = \omega U_0, \text{ time } t=0,$$

where $U_O$ is the effective value of the network voltage, t is time, and $\omega = 2\pi f$. Such a voltage "swing" occurs if the transient voltage increases e.g. such that it first becomes positive and then immediately negative.

According to an embodiment of the invention, the protection circuit comprises an inductance L1, such as a coil, connected in series on the current path between the semiconductor switch S1 and the output 32. The task of the inductance L1 is to prevent a fast transient from causing current/overvoltage in the connection 32 of the device 31 to be protected itself. Preferably, the loading overvoltage protector X1 of the device's own is dimensioned to be stronger than usually in electronic devices. In addition, preferably, in an overvoltage situation it is active only for a very short period of time (< 2 $\mu$s). This makes its life extremely long. In parallel with the overvoltage protector X1, it is also possible to use a capacitance C2, in which case the current $I_X$ generated by charging it with the transient voltage causes the overvoltage protector B3 to operate and the switch S1 to be opened. The overvoltage protector X2 may then be omitted.

A considerable overcurrent of the device 31 to be protected also causes the switch S1 to open. If, however, the device to be protected causes a continuous overcurrent (e.g. > 50 A), the protection circuit according to an embodiment of the invention closes the switch S1 again with a zero voltage only a limited number N of times (at each half cycle when the voltage is 0 V across the switch S1), thereafter leaving the switch S1 open. Preferably, the switch S1 then closes again only after the protection circuit has been disconnected from the network for a short time and been reconnected to the network, or it has been reset by a special button P1.

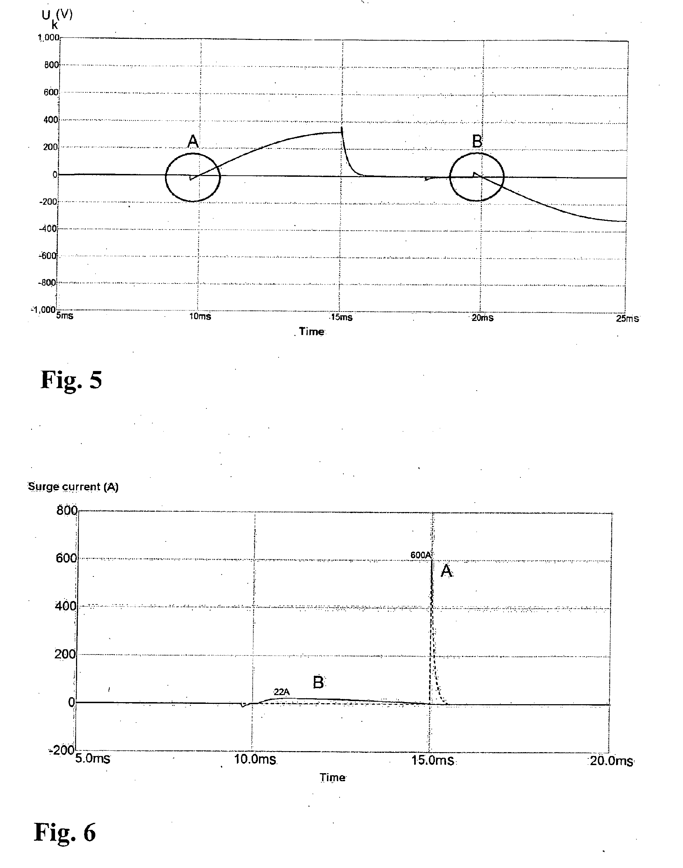

The operation of the protection circuit according to the invention is illustrated in the following by means of an example and with reference to Figures 4 and 5. First, the protection circuit connects a voltage $U_K$ to the device 31 to be protected (i.e. closes the switch S1) at a voltage zero point A at time 10 ms (milliseconds). At time 15 ms, an extremely high-energy overvoltage with a peak value that is 500 V higher than the peak value of the network voltage occurs in the network. The duration of the overvoltage is about 3 ms (within a time range of 15 to 18 ms). The voltage $U_O$ at the output 32 of the protection circuit drops quickly to zero when the overvoltage protector of the protection circuit reacts and breaks the electric circuit by opening the switch S1 (about at time 15 to 16 ms). When the voltage across the switch S1 is again 0 V at point B at time 20 ms, the protection circuit reconnects the voltage $U_K$ to the device 31 to be protected by closing the switch S1.

The resettable, electric-circuit-opening electronic protection circuit according to the invention is efficient in limiting surge currents as well. Almost all electronic devices operating on alternating voltage are provided with full-wave rectification (diode bridge) and an electrolyte capacitor storing energy on direct voltage. In these devices, the charging current of the electrolyte capacitor, which occurs when the device is connected to the electric network, may be limited many different ways. The most common way is to use an NTC (Negative Temperature Coefficient) resistor. Typically, its resistance value is dimensioned to be between R = 5 ...20 ohm. In such a case, it limits the peak value of the surge current being generated at the 230 VAC network voltage to a value of about $\sqrt{2}$*230V=325 V/R. This current is usually sufficiently low in order for the surge current values of the diode bridge not to be exceeded. Similarly, the structure of fuses withstands well thousands of such current pulses. When the electronic device is in operation, it takes the NTC resistor about one minute to become so hot that its resistance value is only a fraction of its original value. However, network voltage breaks present a serious problem to the reliability of such a device since a hot NTC resistor no longer limits the surge current. Therefore, frequent short network voltage breaks (10 ms to 30 s) may damage the diode bridge or even the fuse of the electronic device, even if the I2t value of the fuse were not even exceeded. Breaks of less than 10 ms do not usually cause an increased surge current since the internal electrolyte capacitor of the electronic device has not had the time to discharge completely. In breaks of more than 30 s, in turn, the NTC resistor has enough time to cool down, in which case its resistance increases and it again serves as a current limiter.

The resettable, electric-circuit-opening electronic protection circuit according to the invention limits the surge current to a value of $i_{max} = \sqrt{2}\omega CU$, where C is the capacitance of the device to be connected, U is the effective value of the network voltage, and $\omega$ is the angular frequency of the network ($2\pi$*50). As an example, Figure 6 shows a surge current as a function of time when a voltage breaks occurs when the NTC resistor is hot, whereafter a power source is reconnected to the electric network. In the example, an intermediate circuit of the power source is provided with a capacitor of 220 $\mu$F and the network voltage is 230 VAC/50Hz. With the protection circuit according to the invention, which connects the network voltage to the power source at the voltage zero point, connecting the power source according to the example to the network when it is "hot" causes a surge current of 22 A at most (curve B in Figure 6). In conventional solutions, connecting to the network may take place at any point of a phase. Thus, connecting "hot" may take place at a peak value of the network voltage, in which case the surge current may be hundreds of amperes (curve A in Figure 6).

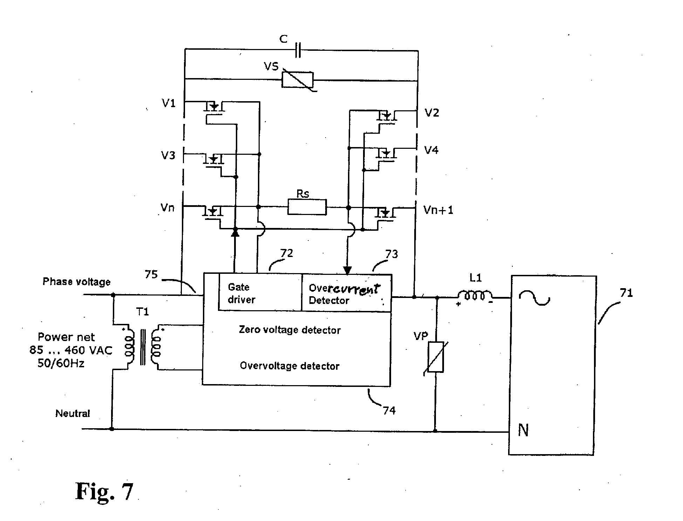

Figure 7 is a connection diagram of an overvoltage and overcurrent protection circuit according to another example embodiment. In the example of Figure 7, the switch 1 is implemented by reverse-coupled FET transistor pairs, the number of such parallel-connected pairs being N. This makes the switch S1 very current-resistant. The transistors are controlled to open and close by a gate driver 72. The summation current of the transistors passes through a resistor Rs, and the voltage across the resistor Rs, which is proportionate to the current, is measured by an overcurrent detector 73. A capacitor $C_1$ and an overvoltage protector VS, which in this example is a metal oxide varistor, are also connected in parallel with the FET transistor pairs. Detection of a zero voltage across the switch S1 is carried out by a block 74 at its input and output poles 75 and 76. The network voltage may be e.g. within a range of 85 to 460 VAC and the network frequency may be e.g. 50 Hz or 60 Hz. In the example, the phase voltage of the electric network is connected to a device 71 to be protected via the switch S1 (transistor pairs), and a neutral line (neutral) is connected directly to the device 71. An overvoltage protector VP, which in this example is a metal oxide varistor, internal to the protection circuit is connected on the output side of the protection circuit, between the phase voltage and the neutral line. After the overvoltage protector VP, an inductance L1 is provided in series on the current path. Monitoring the overvoltage of the network voltage as well as generation of the operation voltage for the electronics are implemented by a transformer T1, whose primary coil is connected between the phase voltage and the neutral line and whose secondary coil is connected to the block 74. In the secondary coil, the transformer T1 generates a measuring voltage which is proportionate to the phase voltage and which is monitored by the overvoltage detector of the block 74 e.g. by comparing with a given threshold value; when this threshold value is achieved, the transistors are controlled in to the non-conductive state (open).

The protection circuit according to the principles of the invention may also be used in a three-phase voltage supply, in which case e.g. the phase voltage V1 of Figure 3 is either a phase voltage (Vr-N when a zero voltage is available) or a main voltage between two phases (e.g. Vr-Vs). The number of protection circuits may then be three if each phase (r, s, t) is connected to a load through their own protection circuit and own series switch S1. In an overvoltage situation between two phases, the protection circuits of both phases react, in which case each protection circuit disconnects the phase voltage from the load by opening the protection switch S1 between the phase voltage and the load. If, again, the overvoltage between a phase and an N conductor is measured, in an overvoltage situation it is the protection device of this phase only that reacts and disconnects the phase current from the network.

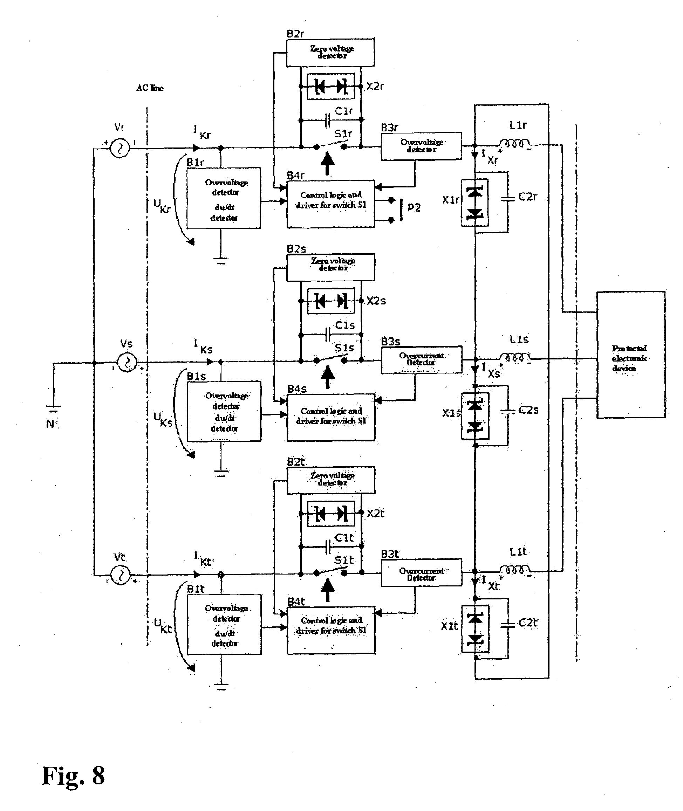

An example of implementing a three-phase protection device as a three-phase one by using the overvoltage and overcurrent protection circuit according to the invention is shown in Figure 8. A three-phase supply includes phases r, s, and t as well as respective phase voltages Vr, Vt, and Vs. In addition, the three-phase supply is provided with a neutral line N (earth). Each of the phase voltages Vr, Vt, and Vs is connected via its own overvoltage and overcurrent protection circuit to a three-phase electronic device to be protected. In Figure 8, the blocks, components, currents, and voltages of the protection circuit of each phase r, s, and t are provided with a subindex r, s, and t according to the phase in question but, preferably, the protection circuits are mutually identical. In addition, all blocks, components, currents, and voltages of the protection circuit according to the example of Figure 8 that have the same reference numerals as those in the above-described embodiments (Figures 2 to 7) may have a structure and functions similar to those set forth in any one of the above-described embodiments or combinations thereof. In the following, only few different features will be explained. The example of Figure 8 shows only one overcurrent protection reset button P2 for a block B4r. Preferably, it influences all blocks B4r, B4s, and B4t. However, if desired, each block B4r, B4s, and B4t may be provided with its own reset switch. In the example of Figure 8, blocks B1r, B1s, and B1t measure the corresponding phase voltage Vr, Vs, and Vt against the neutral line N. This causes no extra current to the N conductor since each phase has an identical block B1r, B1s, and B1t. In an overvoltage situation, it may happen that the protection circuit of only one phase is triggered (i.e. one of the switches S1 r, S1 s, and S1t opens) but in an overvoltage situation it is very likely that the protection circuit of two phases always reacts (i.e. two switches S1 open). The internal overvoltage protector X1r of the protection circuit of phase r and a capacitor C2r parallel therewith are connected between phases r and s so as to cut overvoltages between the phases before an output voltage $U_{or}$ is supplied to the device to be protected. Similarly, the internal overvoltage protector X1 s of the protection circuit of phase s and a capacitor C2s parallel therewith are connected between phases s and t. Further, the internal overvoltage protector X1s of the protection circuit of phase s and a capacitor C2s parallel therewith are connected between phases t and r. In other words, the overvoltage protectors of the phases are connected in a triangle. Thus, the energy (current) contained in the phase-specific overvoltage is always conveyed to another phase. Consequently, the neutral line N remains currentless even in an overvoltage situation.

The invention and its embodiments are not restricted to the above-described examples but may vary within the scope of the claims.

**Claims**

1. An electronic protection circuit, comprising
   an overvoltage detector (B1) and/or an overcurrent detector (B3),
   a semiconductor switch member (S1, S2) in series on a current path between an input to be connected to a supply voltage (V1), such as a network voltage, and an output to be connected to an electronic device (1,21,31,71) to be protected,
   a zero voltage detector (B2) for monitoring a voltage across the semiconductor switch member (S1, S2), and
   a control member (B4) for controlling the semiconductor switch member (S1, S2) in to a non-conductive state and break the current path in response to detecting an overvoltage or overcurrent, and for controlling the semiconductor switch member (S1, S2) back in to a conductive state and for reconnecting the current path when the voltage across the semiconductor switch member, according to the zero voltage detector (B2), is about zero,
   **characterized in that** the electronic protection circuit further comprises monitoring (B1) a rate of change in the supply voltage, the protection circuit being arranged to prevent the semiconductor switch (S1, S2) from being closed when the voltage across it is about zero, if the rate of change in the supply voltage at this zero point is higher than a predetermined threshold value.

2. A protection circuit as claimed in claim 1, comprising a capacitor member (C1) connected in parallel with the semiconductor switch (S1, S2).

3. A protection circuit as claimed in claim 2, comprising a limiter member (X2) connected in parallel with the semiconductor switch member (S1, S2) and the capacitor member for limiting the voltage across the semiconductor switch member.

4. A protection circuit as claimed in any one of the preceding claims, wherein the overcurrent detector (B3) is connected on the current path in series with the semiconductor switch member (S1, S2), the control member (B4) being arranged to control the semiconductor switch member in to the non-conductive state and break the current path when the overcurrent detector (B3) detects an overcurrent, and to control the semiconductor switch member back to the conductive state and reconnect the current path when no overcurrent is detected any longer, no overvoltage occurs in the supply voltage, and the voltage across the semiconductor switch member, according to the zero voltage detector (B2), is about zero.

5. A protection circuit as claimed in any one of the preceding claims, wherein the control member (B4) is arranged to leave the semiconductor switch member (S1, S2) permanently open if the device to be protected causes a continuous overcurrent.

6. A protection circuit as claimed in any one of the preceding claims, comprising an internal limiter member (X1) connected after the semiconductor switch member (S1, S2) for limiting an output voltage.

7. A protection circuit as claimed in claim 6, comprising a filter capacitance (C2) connected in parallel with the limiter member (X1).

8. A protection circuit as claimed in any one of the preceding claims, comprising an inductance (L1) connected in series on the current path between the semiconductor switch member (S1, S2) and the output.

9. A protection circuit as claimed in any one of the preceding claims, wherein the supply voltage is a voltage between a phase voltage of a single or polyphase network voltage supply and the zero voltage or a voltage between two phase voltages.

10. A protection device for a three-phase voltage supply, the device comprising, separately for each phase, a protection circuit according to any one of claims 1 to 9.

11. A protection device as claimed in claim 10, wherein an overvoltage detector of the protection circuit of each phase is arranged to monitor a corresponding phase voltage with respect to a neutral line.

12. A protection device as claimed in claim 10 or 11, wherein limiter members internal to the protection circuits for limiting the output voltage are connected in a delta connection between the phases.

**Patentansprüche**

1. Eine elektronische Schutzschaltung, umfassend
einen Überspannungsdetektor (B1) und/oder einen Überstromdetektor (B3),
ein Halbleiterschalterglied (S1, S2) in Serie in einem Stromweg zwischen einem Eingang, der mit einer Speisespannung (V1) zu verbinden ist, wie zum Beispiel eine Netzspannung, und einem Ausgang, der mit einem elektronischen Gerät (1, 21, 31, 71) zu verbinden ist, das zu schützen ist,
einen Nullspannungsdetektor (B2) zum Überwachen einer anliegenden Spannung am Halbleiterschalterglied (S1, S2), und
ein Steuerglied (B4) zum Steuern des Halbleiterschalterglieds (S1, S2) in einen nicht-leitfähigen Zustand und Unterbrechen des Stromwegs als Reaktion auf das Detektieren einer Überspannung oder eines Überstroms, und zum Steuern des Halbleiterschalterglieds (S1, S2) zurück in einen leitfähigen Zustand und zum Wiederverbinden des Stromwegs, wenn die anliegende Spannung am Halbleiterschalterglied, gemäß dem Nullspannungsdetektor (B2), etwa Null ist,

**dadurch gekennzeichnet, dass** die elektronische Schutzschaltung ferner das Überwachen (B1) einer Änderungsrate in der Speisespannung umfasst, die Schutzschaltung angeordnet ist, um zu verhindern, dass der Halbleiterschalter (S1, S2) geschlossen wird, wenn die anliegende Spannung etwa Null ist, falls die Änderungsrate in der Speisespannung an diesem Nullpunkt höher als ein vorbestimmter Schwellenwert ist.

2.  Schutzschaltung nach Anspruch 1, umfassend ein Kondensatorglied (C1), das in Parallel mit dem Halbleiterschalter (S1, S2) verbunden ist.

3.  Schutzschaltung nach Anspruch 2, umfassend ein Begrenzerglied (X2), das in Parallel mit dem Halbleiterschalterglied (S1, S2) und dem Kondensatorglied verbunden ist, um die anliegende Spannung am Halbleiterschalterglied zu begrenzen.

4.  Schutzschaltung nach einem der vorhergehenden Ansprüche, wobei der Überstromdetektor (B3) im Stromweg in Serie mit dem Halbleiterschalterglied (S1, S2) verbunden ist, das Steuerglied (B4) angeordnet ist, um das Halbleiterschalterglied in den nicht leitfähigen Zustand zu steuern und den Stromweg zu unterbrechen, wenn der Überstromdetektor (B3) einen Überstrom detektiert, und um das Halbleiterschalterglied zurück in den leitfähigen Zustand zu steuern und den Stromweg wieder zu verbinden, wenn kein Überstrom mehr detektiert wird, keine Überspannung in der Speisespannung auftritt, und die anliegende Spannung am Halbleiterschalterglied, gemäß dem Nullspannungsdetektor (B2), etwa Null ist.

5.  Schutzschaltung nach einem der vorhergehenden Ansprüche, wobei das Steuerglied (B4) angeordnet ist, um das Halbleiterschalterglied (S1, S2) permanent offen zu lassen, falls das zu schützende Gerät einen kontinuierlichen Überstrom verursacht.

6.  Schutzschaltung nach einem der vorhergehenden Ansprüche, umfassend ein internes Begrenzerglied (X1), das nach dem Halbleiterschalterglied (S1, S2) zum Begrenzen einer Ausgangsspannung verbunden ist

7.  Schutzschaltung nach Anspruch 6, umfassend eine Filterkapazität (C2), die in Parallel mit dem Begrenzerglied (X1) verbunden ist.

8.  Schutzschaltung nach einem der vorhergehenden Ansprüche, umfassend eine Induktivität (L1), die in Serie im Stromweg zwischen dem Halbleiterschalterglied (S1, S2) und dem Ausgang verbunden ist.

9.  Schutzschaltung nach einem der vorhergehenden Ansprüche, wobei die Speisespannung eine Spannung zwischen einer Phasenspannung einer Ein- oder Mehrphasennetzspannungsspeisung und der Nullspannung oder eine Spannung zwischen zwei Phasenspannungen ist.

10. Schutzgerät für eine Dreiphasenspannungsspeisung, das Gerät umfassend, separat für jede Phase, eine Schutzschaltung gemäß einem der Ansprüche 1 bis 9.

11. Schutzgerät nach Anspruch 10, wobei ein Überspannungsdetektor der Schutzschaltung von jeder Phase angeordnet ist, um eine entsprechende Phasenspannung mit Bezug auf einen Neutralleiter zu überwachen.

12. Schutzgerät nach Anspruch 10 oder 11, wobei die Begrenzerglieder intern zu den Schutzschaltungen zum Begrenzen der Ausgangsspannung in einer Dreieckschaltung zwischen den Phasen verbunden sind.

## Revendications

1.  Circuit de protection électronique, comprenant
    un détecteur de surtension (B1) et/ou un détecteur de surintensité (B3),
    un élément commutateur à semi-conducteur (S1, S2) en série sur un chemin de courant entre une entrée à relier à une tension d'alimentation (V1), comme une tension de réseau, et une sortie à relier à un dispositif électronique (1, 21, 31, 71) à protéger,
    un détecteur de tension nulle (B2) pour contrôler une tension aux bornes de l'élément commutateur à semi-conducteur (S1, S2), et

un élément de commande (B4) pour commander l'élément commutateur à semi-conducteur (S1, S2) dans un état non conducteur et couper le chemin de courant en réponse à la détection d'une surtension ou d'une surintensité, et pour ramener l'élément commutateur à semi-conducteur (S1, S2) dans un état conducteur et pour reconnecter le chemin de courant lorsque la tension aux bornes de l'élément commutateur à semi-conducteur, selon le détecteur de tension nulle (B2), est à peu près nulle,

**caractérisé en ce que** le circuit de protection électronique comprend en outre le contrôle (B1) d'un rythme de variation de la tension d'alimentation, le circuit de protection étant agencé pour empêcher le commutateur à semi-conducteur (S1, S2) d'être fermé lorsque la tension aux bornes de ce dernier est à peu près nulle, si le rythme de variation dans la tension d'alimentation à ce point nul est plus élevé qu'une valeur de seuil prédéterminée.

2. Circuit de protection selon la revendication 1, comprenant un élément condensateur (C1) relié en parallèle avec le commutateur à semi-conducteur (S1, S2).

3. Circuit de protection selon la revendication 2, comprenant un élément limiteur (X2) relié en parallèle avec l'élément commutateur à semi-conducteur (S1, S2) et l'élément condensateur pour limiter la tension aux bornes de l'élément commutateur à semi-conducteur.

4. Circuit de protection selon l'une quelconque des revendications précédentes, dans lequel le détecteur de surintensité (B3) est relié sur le chemin de courant en série avec l'élément commutateur à semi-conducteur (S1, S2), l'élément de commande (B4) étant agencé pour commander l'élément commutateur à semi-conducteur dans l'état non conducteur et couper le chemin de courant lorsque le détecteur de surintensité (B3) détecte une surintensité, et pour ramener l'élément commutateur à semi-conducteur à l'état conducteur et reconnecter le chemin de courant lorsque plus aucune surintensité n'est détectée, qu'aucune surtension ne se produit dans la tension d'alimentation, et que la tension aux bornes de l'élément commutateur à semi-conducteur, selon le détecteur de tension nulle (B2), est à peu près nulle.

5. Circuit de protection selon l'une quelconque des revendications précédentes, dans lequel l'élément de commande (B4) est agencé pour laisser l'élément commutateur à semi-conducteur (S1, S2) ouvert en permanence si le dispositif à protéger provoque une surintensité continue.

6. Circuit de protection selon l'une quelconque des revendications précédentes, comprenant un élément limiteur interne (X1) relié après l'élément commutateur à semi-conducteur (S1, S2) pour limiter une tension de sortie.

7. Circuit de protection selon la revendication 6, comprenant une capacité de filtrage (C2) reliée en parallèle avec l'élément limiteur (X1).

8. Circuit de protection selon l'une quelconque des revendications précédentes, comprenant une inductance (L1) reliée en série sur le chemin de courant entre l'élément commutateur à semi-conducteur (S1, S2) et la sortie.

9. Circuit de protection selon l'une quelconque des revendications précédentes, dans lequel la tension d'alimentation est une tension entre une tension de phase d'une alimentation en tension de réseau mono ou polyphasé et la tension nulle ou une tension entre deux tensions de phase.

10. Dispositif de protection pour une alimentation en tension triphasée, le dispositif comprenant, séparément pour chaque phase, un circuit de protection selon l'une quelconque des revendications 1 à 9.

11. Dispositif de protection selon la revendication 10, dans lequel un détecteur de surtension du circuit de protection de chaque phase est agencé pour contrôler une tension de phase correspondante par rapport à une ligne neutre.

12. Dispositif de protection selon la revendication 10 ou 11, dans lequel des éléments limiteurs internes aux circuits de protection pour limiter la tension de sortie sont reliés en une connexion delta entre les phases.

AC voltage

Protected
Electronic
Device

V1

S1

Normally open

~1

**Fig. 1**

Eg. Phase voltage

S2

Protected
Electronic
Device

V1

Normally closed

~21

e.g. neutral line

or another phase voltage

**Fig. 2**

**Fig. 3**

**Fig. 4**

**Fig. 5**

**Fig. 6**

**Fig. 7**

**Fig. 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5440441 A

- EP 0392733 A